# EUROPÄISCHE PATENTSCHRIFT

(11) **EP 0 559 040 B1**
(45) Veröffentlichungstag und Bekanntmachung des Hinweises auf die Patenterteilung: **07.05.1997**
(21) Anmeldenummer: 93102719.7
(22) Anmeldetag: 20.02.1993
(51) Int. Cl.: G02F 1/01

(54) **Verfahren zur Herstellung optoelektronischer Bauelemente**
Process of manufacturing optoelectronic components
Procédé de fabrication de composants optoélectroniques

(30) Priorität: 29.02.1992 DE 4206328
(43) Veröffentlichungstag der Anmeldung: 08.09.1993
(73) Patentinhaber: Alcatel SEL Aktiengesellschaft, D-70435 Stuttgart (DE); ALCATEL N.V., NL-1077 XX Amsterdam (NL)
(72) Erfinder: Springer, Johann, Dr., W-7307 Aichwald (DE); Kersten, Peter, Dr., W-7250 Leonberg (DE); Matthies, Klaus-D., W-7141 Möglingen (DE)
(74) Vertreter: Schätzle, Albin, Dipl.-Phys.

(56) Entgegenhaltungen:
- EP-A- 0 445 527
- US-A- 5 039 186
- PROCEEDINGS OF THE 4TH INT. IEEE VLSI MULTILEVEL INTERCONNECTION CONFERENCE, 15. Juni 1987, Santa Clara CA, US, Seiten 306-313; R. SELVARAJ et al.: 'Optical Interconnections Using Integrated Waveguides In Polyimide for Wafer Scale Integration'
- PATENT ABSTRACTS OF JAPAN, vol. 10, no. 143 (P-459)[2200], 27. Mai 1986; & JP-A-60 263 102

## Beschreibung

Die Erfindung betrifft ein Verfahren zur Herstellung von optoelektronischen Bauelementen, mit einem Lichtleiter aus einem optisch nicht linearen Polymer und ober- und unterhalb des Lichtleiters angeordneten Streifenelektroden.

Derartige optoelektronische Bauelemente sind bekannt (Aufsatz: "Organic polymer films for nonlinear optics" in Br. Telecom Technol. J., Vo. 6, No. 3, July 1988, Seiten 5 bis 7).

Es sind optoelektronische Bauelemente bekannt (US-A-5, 039, 186), welche auf einem Substrat angeordnet sind und bei denen der Lichtwellenleiter aus nichtlinearen Polymeren besteht. Bei dem aus der vorstehend genannten Druckschrift bekannten Bauelement ist das Substrat eine mit Siliziumdioxid beschichtete Siliziumscheibe, welche mit einer elektrisch leitenden Schicht, vorzugsweise aus Gold, versehen wird. Anschließend wird auf das derart vorbereitete Substrat eine Pufferschicht bzw. Bufferschicht aus einem organischen Werkstoff aufgebracht, in welche ein Graben geätzt wird. Auf der Bufferschicht und im Graben wird eine Wellenleiterschicht aus einem nichtlinearen optisch aktiven Werkstoff erzeugt. Auf dieser Anordnung wird dann noch eine obere Bufferschicht und eine zweite Goldelektrode erzeugt.

Es ist auch ein optoelektronisches Bauelement bekannt (EP-A-514 732), bei dem der optische Wellenleiter auf einem Substrat aufgebaut ist, welches aus Glas oder Silizium mit einer darauf angeordneten dünnen Siliziumoxydschicht besteht. Auf dem Substrat ist eine streifenförmige Elektrode angeordnet, welche beispielsweise aus einer Chrom-Gold-Schicht bestehen kann und mittels eines photolithographischen Verfahrens strukturiert worden ist. Darauf schließt sich eine Bufferschicht an, welche aus einem anorganischen oder organischen Werkstoff bestehen kann. Die obere lichtführende Schicht besteht aus einem optisch nichtlinearen Polymer, auf welcher eine weitere Elektrode angeordnet ist. Die Druckschrift, in welcher dieses Bauelement beschrieben ist, ist eine Schrift gemäß Art. 54(3) EPÜ.

Die bekannten optoeletronischen Bauelemente besitzen einen sogenannten Sandwich-Aufbau, d. h. die Streifenelektroden, die Bufferschichten und der Lichtleiter sind in Schichten übereinander angeordnet. Für die optimale Funktion eines optoelektronischen Bauelementes, beispielsweise eines Richtkopplerss, bei dem der Lichtleiter aus einem optisch nicht linearen Polymer besteht, ist es erforderlich, daß der oder die Lichtleiter mit äußerster Genauigkeit zu den als Ansteuerelektroden fungierenden Streifenelektroden angeordnet sind. Der Lichtleiter selbst weist dabei eine Breite von einigen µm auf und die Toleranzen sollen sehr viel kleiner als ein µm sein.

Das der Erfindung zugrunde liegende technische Problem besteht dehalb darin, ein Verfahren zur Herstellung von optoelektronischen Bauelementen anzugeben, welches es ermöglicht, die Streifenelektroden in sehr geringem Abstand mit großer Genauigkeit zum Lichtleiter anzuordnen.

Dieses technische Problem ist gemäß der einen Lösung durch ein Verfahren mit folgenden Verfahrensschritten gelöst:
a) auf einem mit einer Schicht aus elektrisch leitfähigem Werkstoff versehenen Substrat aus Glas wird mittels eines photolithographischen Verfahrens wenigstens eine Streifenelektrode hergestellt,
b) das Substrat wird mit einer Bufferschicht aus einem Polymer versehen, welche ausgehärtet wird,
c) die Oberfläche der Bufferschicht wird mit einer gegen Sauerstoff-Plasma resistenten Schutzschicht versehen,
d) es wird eine weitere Bufferschicht aus einem Polymer aufgebracht und diese mit einem Positiv-Photolack beschichtet,
e) das Substrat wird von der Unterseite her belichtet,
f) der Photolack wird entwickelt und der belichtete Photolack entfernt,
g) es wird eine dünne Aluminiumschicht auf der zweiten Bufferschicht aufgedampft,
h) die entwickelte unbelichtete Photolackschicht mit der darauf befindlichen Aluminiumschicht wird entfernt,
i) in der zweiten Bufferschicht wird unter Verwendung der Aluminiumschicht als Ätzmaske oberhalb der Streifenelektrode ein Kanal geätzt,
j) die Aluminiumschicht wird entfernt,
k) es wird eine Schicht aus einem optisch nicht linearen Polymer aufgebracht, welche auch den Kanal ausfüllt,
l) es wird eine dritte Bufferschicht erzeugt,
m) auf der dritten Bufferschicht wird wenigstens eine weitere Streifenelektrode erzeugt.

Bei einer weiteren Lösung des technischen Problems besteht das Verfahren aus folgenden Verfahrensschritten:
a) auf einem mit einer Schicht aus elektrisch leitfähigem Werkstoff versehenen Substrat aus Glas wird mittels eines photolithographishen Verfahrens wenigstens eine Streifenelektrode hergestellt,
b) auf das Substrat wird eine Bufferschicht aus einem photohärtenden Polymer aufgebracht und anschließend ausgehärtet,
c) es wird eine zweite Bufferschicht aus einem photohärtenden Polymer hergestellt,
d) die zweite Bufferschicht wird von der Unterseite des Substrats her belichtet,
e) die belichteten Teile der zweiten Bufferschicht werden entwickelt und entfernt,
f) es wird eine Schicht aus einem optisch nicht linearen Polymer aufgebracht, welche auch den in der zweiten Bufferschicht entstandenen Kanal ausfüllt,
g) es wird eine dritte Bufferschicht erzeugt,
h) auf der dritten Bufferschicht wird wenigstens eine weitere Streifenelektrode erzeugt.

Wenn optoelekronische Bauelemente mit vorstehend angegebenen Verfahren hergestellt werden, dann können die an sie gestellten Genauigkeitsanforderungen erfüllt werden.

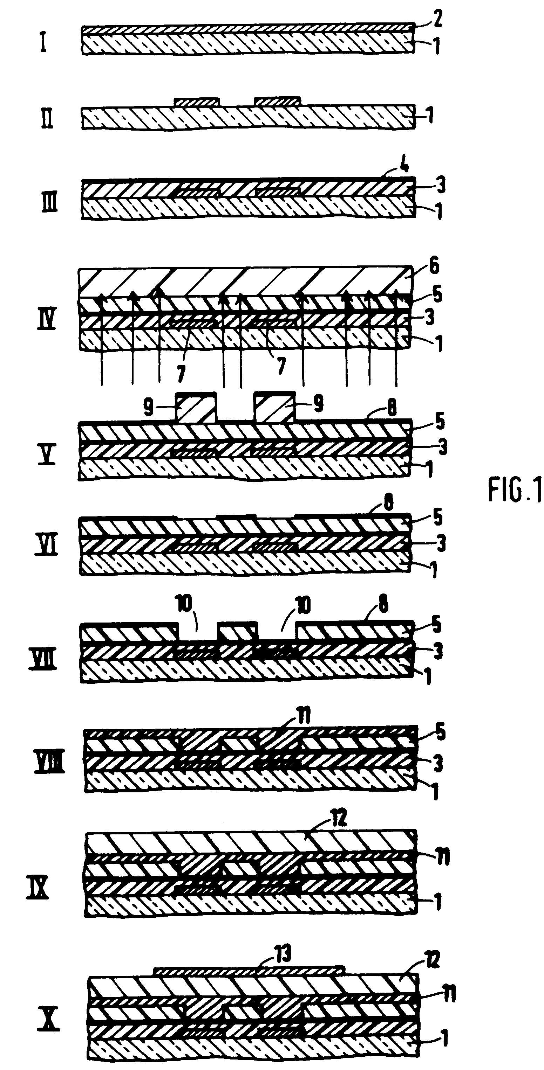

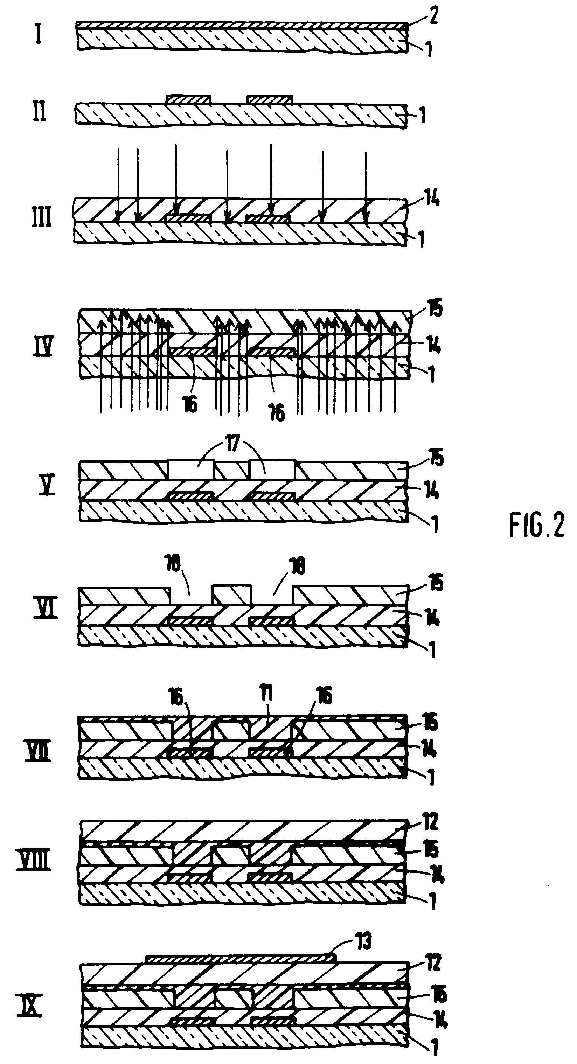

Vorteilhafte Einzelheiten der Erfindung sind in den Ansprüchen 3 bis 5 enthalten. Sie sind nachstehend anhand der Figuren 1 und 2 erläutert, welche die Verfahrensschritte bei der Durchführung der erfindungsgemäßen Verfahren verdeutlichen.

Wie aus Fig. 1 zu erkennen ist, besteht das Ausgangsprodukt für die Herstellung des optoelektronischen Bauelements bei der Stufe I aus dem Substrat 1 aus Glas und der darauf angeordneten Schicht 2 aus einem elektrisch leitfähigen Werkstoff, beispielsweise Gold oder Aluminium. Die Stufe II zeigt das Substrat 1, nachdem aus der Schicht 2 die Flächen entfernt worden sind, welche nicht für die Streifenelektroden und die Zuleitungen zu diesen benötigt werden. Das kann beispielsweise nach einem an sich bekannten photolithographischen Verfahren erfolgen.

Die Stufe III zeigt das Substrat 1, nachdem eine Bufferschicht 3 aus einem Polymer aufgebracht worden ist. Bei dem Polymer kann es sich um ein mit dem optisch nicht linearen Polymer verwandten Werkstoff handeln, welcher keine oder nur wenig Chromophore enthält oder bei dem die Chromophore ausgebleicht worden sind. Auf der Bufferschicht ist eine Schutzschicht 4 gegen Sauerstoff-Plasma angeordnet. Bei dieser Schicht kann es sich entweder um eine dünne, gegen Sauerstoff-Plasma resistente Schicht, beispielsweise aus Siliziumdioxyd handeln. Es ist aber auch möglich, daß auf der Oberfläche der Bufferschicht 3 eine dünne Schicht durch chemische Reaktion, beispielsweise durch Silylierung, gegen Sauerstoff-Plasma resistent gemacht worden ist.

Die Stufe IV zeigt das Substrat 1, nachdem auf die erste Bufferschicht 3 und die Schutzschicht 4 eine weitere Bufferschicht 5 aufgebracht worden ist. Außerdem ist diese Bufferschicht 5 mit einer Schicht 6 aus einem Positiv-Photolack bedeckt. Erforderlicherfalls kann vor dem Aufbringen des Positiv-Photolacks auf die Bufferschicht 6 eine dünne, gegen Lösungsmittel resistente Schicht (nicht gezeigt), beispielsweise aus Siliziumdioxyd (SiO₂) oder Siliziumoxynitirid (SiOₓN_{y}), aufgebracht werden. Die Schicht schützt die zweite Bufferschicht, wenn später der Photolack wieder entfernt wird.

Die Pfeile in der Stufe IV deuten an, daß das Substrat von unten belichtet wird, wobei die Streifenelektroden 7 als Maske dienen. Wenn der Positiv-Photolack entwickelt und die belichteten Flächen entfernt worden sind, ist eine Anordnung gemäß Stufe V entstanden. Die dort gezeigte Anordnung ist bereits mit einer dünnen Aluminiumschicht 8 versehen, welche beispielsweise mittels eines Elektronenstrahlverdampfungs-Verfahrens aufgebracht worden ist.

Bei der in Stufe VI gezeigten Anordnung fehlen die bei der Anordnung in Stufe V noch vorhandenen Flächen 9 aus entwickeltem Photolack. Sie sind abgelöst worden. Es ist die unterbrochene Aluminiumschicht 8 übrig geblieben, welche als Ätzmaske dient.

Wie aus der Anordnung gemäß Stufe VII zu erkennen ist, sind jetzt an den Flächen, an welchen die Aluminiumschicht 8 fehlte, Kanäle 10. Sie sind dadurch entstanden, daß die zweite Bufferschicht 6 dort durch reaktives Ionenätzen mit Sauerstoffplasma weggeätzt worden ist.

Bei der Anordnung gemäß Stufe VIII ist eine weitere Schicht 11 vorhanden, welche auch die Kanäle 10 ausfüllt. Diese Schicht ist aufgebracht worden, nachdem die Aluminiumschicht 8 entfernt worden ist. Sie besteht aus dem optisch nicht linearen Polymer.

Erforderlichenfalls kann die Schicht 11 durch Prägen verdichtet werden.

Bei der Anordnung gemäß Stufe IX ist eine weitere Schicht 12 vorhanden. Es handelt sich dabei um die dritte oder obere Bufferschicht. Die Anordnung gemäß Stufe X zeigt das fertige optoelektronische Bauelement, welches durch Aufbringen und Strukturieren der oberen Elektrode 13 vervollständigt worden ist.

In Fig. 2 sind die verschiedenen Stufen eines weiteren Verfahrens zur Herstellung eines optoelektronischen Bauelementes dargestellt. Wie aus der Stufe I der Fig. 2 zu erkennen ist, besteht das Ausgangsprodukt für die Herstellung des optoelektronischen Bauelementes ebenfalls aus dem Substrat 1 aus Glas und der darauf angeordneten Schicht 2 aus einem elektrisch leitfähigen Werkstoff, beispielsweise Gold oder Aluminium. Die Stufe II zeigt - in gleicher Weise wie beim Verfahren gemäß Fig. 1 - das Substrat 1, nachdem aus der Schicht 2 die Flächen entfernt worden sind, welche nicht für die Streifenelektroden und die Zuleitungen zu diesen benötigt werden.

Die Stufe III zeigt das Substrat 1, nachdem eine Bufferschicht 14 aus einem photohärtenden Polymer aufgebracht und durch Bestrahlen mit UV-Strahlen ausgehärtet worden ist. Das Bestrahlen durch UV-Strahlen ist durch die Pfeile angedeutet. Bei dem Polymer kann es sich beispielsweise um ein einen Photoinitiator enthaltendes Acrylat handeln. Anstelle des photohärtenden Polymers kann auch ein thermisch vernetzbares Polymer verwendet werden. Die UV-Bestrahlung ist dann durch eine Wärmebehandlung zu ersetzen.

Die Stufe IV zeigt das Substrat 1, nachdem eine weitere Bufferschicht 15 aus einem photohärtenden Polymer aufgebracht worden ist. Die Pfeile deuten an, daß die Anordnung gemäß Stufe IV von unten her belichtet wird, wobei die Streifenelektroden 16 als Maske dienen. Bei diesem Vorgang werden die belichteten Flächen in der Bufferschicht 15 ausgehärtet, und die nicht belichteten (von den Streifenelektroden abgeschatteten) Flächen werden nicht ausgehärtet. Wie aus Stufe V zu erkennen, verbleiben dadurch die nicht gehärteten Flächen 17 in der Bufferschicht 15. Die Flächen 17 werden entfernt, wodurch - wie aus Stufe VI ersichtlich ist - Kanäle 18 in der Bufferschicht 15 zurückbleiben.

Die Stufen VII bis IX sind dann identisch mit den Stufen VIII bis X bei dem Verfahren gemäß Fig. 1. Die gleichen Bestandteile der Anordnung weisen deshalb auch die gleichen Bezugszeichen wie in Fig. 1 auf.

## Patentansprüche

1. Verfahren zur Herstellung von optoelektronischen Bauelementen mit einem Lichtleiter aus einem optisch nicht linearen Polymer und ober- und unterhalb des Lichtleiters angeordneten Streifenelektroden, welches folgende Verfahrensschritte umfaßt:
a) auf einem mit einer Schicht (2) aus elektrisch leitfähigem Werkstoff versehenen Substrat (1) aus Glas wird mittels eines photolithographischen Verfahrens wenigstens eine Streifenelektrode (7) hergestellt,
b) das Substrat (1) wird mit einer Pufferschicht (3) aus einem Polymer versehen, welche ausgehärtet wird,
c) die Oberfläche der Pufferschicht (3) wird mit einer gegen Sauerstoff-Plasma resistenten Schutzschicht (4) versehen,
d) es wird eine weitere Pufferschicht (5) aus einem Polymer aufgebracht und diese mit einem Positiv-Photolack (9) beschichtet,
e) das Substrat (1) wird von der Unterseite her belichtet,
f) der Photolack (9) wird entwickelt und der belichtete Photolack entfernt,
g) es wird eine dünne Aluminiumschicht (8) auf der zweiten Pufferschicht (5) aufgedampft,
h) die entwickelte unbelichtete Photolackschicht mit der darauf befindlichen Aluminiumschicht (8) wird entfernt,
i) in der zweiten Pufferschicht (5) wird unter Verwendung der Aluminiumschicht (8) als Ätzmaske oberhalb der Streifenelektrode (7) ein Kanal (10) geätzt,
j) die Aluminiumschicht (8) wird entfernt,
k) es wird eine Schicht (11) aus einem optisch nicht linearen Polymer aufgebracht, welche auch den Kanal (10) ausfüllt,
l) es wird eine dritte Pufferschicht (12) erzeugt,
m) auf der dritten Pufferschicht (12) wird wenigstens eine weitere Streifenelektrode (13) erzeugt.

2. Verfahren zur Herstellung von optoelektronischen Bauelementen mit einem Lichtleiter aus einem optisch nicht linearen Polymer und ober- und unterhalb des Lichtleiters angeordneten Streifenelektroden, welches folgende Verfahrensschritte umfaßt:
a) auf einem mit einer Schicht (2) aus elektrisch leitfähigem Werkstoff versehenen Substrat (1) aus Glas wird mittels eines photolithographischen Verfahrens wenigstens eine Streifenelektrode (16) hergestellt,
b) auf das Substrat (1) wird eine Pufferschicht (14) aus einem photohärtenden Polymer aufgebracht und anschließend ausgehärtet,
c) es wird eine zweite Pufferschicht (15) aus einem photohärtenden Polymer hergestellt,
d) die zweite Pufferschicht (15) wird von der Unterseite des Substrats (1) her belichtet,
e) die belichteten Teile der zweiten Pufferschicht (15) werden entwickelt und entfernt,
f) es wird eine Schicht (11) aus einem optisch nicht linearen Polymer aufgebracht, welche auch den in der zweiten Pufferschicht entstandenen Kanal (18) ausfüllt,
g) es wird eine dritte Pufferschicht (12) erzeugt,
h) auf der dritten Pufferschicht (12) wird wenigstens eine weitere Streifenelektrode (13) erzeugt.

3. Verfahren nach Anspruch 1, wobei als Schutz (4) für die erste Pufferschicht (3) deren Oberfläche durch chemische Behandlung verändert wird.

4. Verfahren nach den Ansprüchen 1 bis 3, wobei die zweite Pufferschicht (5) vor dem Aufbringen des Positiv-Photolacks mit einer gegen Lösungsmittel resistenten Schicht (4) versehen wird.

5. Verfahren nach den Ansprüchen 1 und 4, wobei der Kanal (10) in der zweiten Pufferschicht (5, 15) und der gegen Lösungsmittel resistenten Schicht (4) durch reaktives Ionenätzen hergestellt wird.

## Claims

1. A method of manufacturing optoelectronic devices comprising an optical waveguide made of an optically nonlinear polymer and stripe electrodes arranged above and below the optical waveguide, said method comprising the following steps:
a) On a glass substrate (1) provided with a layer (2) of electrically conductive material, at least one stripe electrode (7) is formed by a photolithographic technique;
b) the substrate (1) is provided with a buffer layer (3) of a polymer, which is cured;
c) the surface of the buffer layer (3) is provided with a protective layer (4) resistant to oxygen plasma;
d) a further buffer layer (5) of a polymer is deposited, and then coated with a positive photoresist (9);
e) the substrate (1) is exposed from below;
f) the photoresist (9) is developed, and the exposed photoresist is removed;
g) a thin aluminum layer (8) is deposited on the second buffer layer (5) by evaporation;
h) the developed unexposed photoresist layer with the aluminum layer (8) thereon is removed;
i) a channel (10) is etched into the second buffer layer (5) above the stripe electrode (7), using the aluminum layer (8) as an etch mask;
j) the aluminum layer (8) is removed;
k) a layer (11) of an optically nonlinear polymer is deposited which also fills the channel (10);
l) a third buffer layer (12) is formed; and
m) at least one further stripe electrode (13) is formed on the third buffer layer (12).

2. A method of manufacturing optoelectronic devices comprising an optical waveguide made of an optically nonlinear polymer and stripe electrodes arranged above and below the optical waveguide, said method comprising the following steps:
a) On a glass substrate (1) provided with a layer (2) of electrically conductive material, at least one stripe electrode (16) is formed by a photolithographic technique;
b) a buffer layer (14) of a photocuring polymer is deposited on the substrate (1) and subsequently cured;
c) a second buffer layer (15) of a photocuring polymer is formed;
d) the second buffer layer (15) is exposed from the underside of the substrate (1);
e) the exposed portions of the second buffer layer (15) are developed and removed;
f) a layer (11) of an optically nonlinear polymer is deposited which also fills the channel (18) created in the second buffer layer;
g) a third buffer layer (12) is formed; and
h) at least one further stripe electrode (13) is formed on the third buffer layer (12).

3. A method as claimed in claim 1 wherein as protection (4) for the first buffer layer (3), the surface of the latter is changed by chemical treatment.

4. A method as claimed in claims 1 to 3 wherein prior to the deposition of the positive photoresist, the second buffer layer (5) is provided with a solvent-resisting layer (4).

5. A method as claimed in claims 1 and 4 wherein the channels (10) in the second buffer layer (5, 15) and in the solvent-resisting layer (4) are formed by reactive ion etching.

## Revendications

1. Procédé de fabrication de composants optoélectroniques avec un guide de lumière en polymère de comportement optique non linéaire et avec des électrodes en forme de bandes disposées au-dessus et au-dessous du guide de lumière.
Ce procédé comprend les étapes suivantes :
a) sur un substrat en verre (1) recouvert d'une couche (2) d'un matériau conducteur d'électricité, on applique au moins une électrode en bande (7) à l'aide d'un procédé photolithographique,
b) le substrat (1) est recouvert d'une couche tampon (3) en polymère qui est ensuite durci,
c) la surface de la couche tampon (3) est recouverte d'une couche de protection (4) résistante au plasma d'oxygène,
d) une autre couche tampon (5) en polymère est appliquée, laquelle est recouverte d'une couche de photolaque positive (9),
e) le substrat (1) est insolé par le dessous,
f) la photolaque (9) est développée et la photolaque insolée est enlevée,
g) une fine couche d'aluminium (8) est métallisée sous vide sur la deuxième couche tampon (5),
h) la couche de photolaque développée, non insolée, est enlevée avec la couche d'aluminium (8) qui la recouvre,
i) en utilisant la couche d'aluminium (8) comme masque de photogravure, un canal (10) est gravé au-dessus de l'électrode en forme de bande (7), dans la deuxième couche tampon (5),
j) la couche d'aluminium (8) est enlevée,
k) une couche (11) d'un polymère de comportement optique non linéaire est appliquée, laquelle remplit également le canal (10),
l) on applique une troisième couche tampon (12),
m) on applique au moins une autre électrode en forme de bande (13) sur la troisième couche tampon (12).

2. Procédé de fabrication de composants optoélectroniques avec un guide de lumière en polymère de comportement optique non linéaire et avec des électrodes en bande disposées au-dessus et au-dessous du guide de lumière.
Ce procédé comprend les étapes suivantes :
a) sur un substrat en verre (1) recouvert d'une couche (2) d'un matériau conducteur d'électricité, on applique au moins une électrode en forme de bande (16) à l'aide d'un procédé photolithographique,
b) on applique sur la substrat (1) une couche tampon (14) composée d'un polymère photodurcissant, qui est ensuite durci,
c) on applique une deuxième couche tampon (15) en polymère photodurcissant,
d) la deuxième couche tampon (15) est insolée par le dessous du substrat (1),
e) les parties insolées de la deuxième couche tampon (15) sont développées puis enlevées,
f) une couche (11) d'un matériau polymère de comportement optique non linéaire est appliquée, laquelle remplit également le canal (18) créé dans la deuxième couche tampon,
g) on applique une troisième couche tampon (12),
h) on applique au moins une autre électrode en bande (13) sur la couche tampon (12).

3. Procédé suivant la revendication 1 dans lequel la protection (4) de la première couche tampon (3) est réalisée par traitement chimique de la surface de cette dernière.

4. Procédé suivant les revendications 1 à 3 dans lequel une couche (4) résistante aux solvants est appliquée sur la deuxième couche tampon (5) avant l'application de la photolaque positive.

5. Procédé suivant les revendications 1 et 4 dans lequel le canal (10) est créé par gravure ionique dans la deuxième couche tampon (5,15) et dans la couche (4) résistante aux solvants.
